(19) Europäisches Patentamt
European Patent Office
Office européen des brevets

(11) **EP 4 620 917 A1**

(12) **EUROPEAN PATENT APPLICATION**
published in accordance with Art. 153(4) EPC

(43) Date of publication:
**24.09.2025 Bulletin 2025/39**

(21) Application number: **23891548.2**

(22) Date of filing: **13.11.2023**

(51) International Patent Classification (IPC):
$C01G\ 23/00^{(2006.01)}$   $C09D\ 7/62^{(2018.01)}$
$B01J\ 35/39^{(2024.01)}$

(52) Cooperative Patent Classification (CPC):
**B01J 23/835; B01J 35/39; C01G 23/00; C09D 7/62**

(86) International application number:
**PCT/JP2023/040827**

(87) International publication number:
**WO 2024/106401 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.11.2022 JP 2022183301**

(71) Applicant: **JGC Catalysts and Chemicals Ltd.**
**Kawasaki-shi, Kanagawa 212-0013 (JP)**

(72) Inventors:
• **YAMAGUCHI, Jun**
  **Kitakyushu-shi, Fukuoka 808-0027 (JP)**
• **SHIMIZU, Takehiro**
  **Kitakyushu-shi, Fukuoka 808-0027 (JP)**
• **MURAGUCHI, Ryo**
  **Kitakyushu-shi, Fukuoka 808-0027 (JP)**

(74) Representative: **Gille Hrabal**
**Partnerschaftsgesellschaft mbB**
**Patentanwälte**
**Brucknerstraße 20**
**40593 Düsseldorf (DE)**

(54) **TITANIUM OXIDE PARTICLES, LIQUID DISPERSION, COATING SOLUTION FOR COATING FILM FORMATION USE, COATING FILM, AND SUBSTRATE WITH COATING FILM**

(57) Titanium oxide particles satisfying all of requirements (1) to (3) below.

(1) The titanium oxide particles have a rutile crystal structure.

(2) A unit cell of the crystal structure satisfies at least one of (a) or (b) below.

(a) An a-axis has a length of 0.4594 nm or more.

(b) A c-axis has a length of 0.2959 nm or more.

(3) The titanium oxide particles have an energy gap of 2.90 eV or less.

EP 4 620 917 A1

**Description**

TECHNICAL FIELD

The present invention relates to titanium oxide particles.

BACKGROUND ART

Titanium oxide is widely used as, for example, photocatalysts, UV cutting materials, and materials of coating solutions for forming coating films on optical substrates. Anatase, rutile, and brookite are well known as crystal structures of titanium oxide, and different crystal structures provide different properties of titanium oxide. For example, anatase titanium oxide particles have high photocatalytic activity and are used as materials for odor elimination, deodorizing, and antifouling. On the other hand, rutile titanium oxide particles have a high refractive index and have lower photocatalytic activity than those in the anatase form, and thus are used as refractive index-adjusting materials for coating films. For example, rutile titanium oxide particles are used for hard-coat layers of substrates or the like. Such a hard-coat layer contains, besides rutile titanium oxide, other components such as an organosilicon compound and a resin. If the particles have excessively strong photocatalytic activity, these components are decomposed, which may cause cracking of the hard-coat layer and a decrease in adhesion between the substrate and the hard-coat layer. This phenomenon causes a problem when a substrate on which a layer containing titanium oxide is formed is used in the presence of light including ultraviolet light, such as sunlight (weatherability). This causes a problem even in the case of using ordinary rutile titanium oxide, which is generally considered to have lower photocatalytic activity than other crystal forms, and various solutions have been proposed.

For example, Patent Literature 1 discloses that, to provide a coating solution for forming a hard-coat film that has a high refractive index and that is excellent in transparency, weatherability, and adhesion to substrates, the film-forming coating solution contains compound oxide particles including a titanium oxide component and an iron oxide component, in which $Fe_2O_3/TiO_2$ (weight ratio) is in a range of 0.0005 or more and less than 0.005. Patent Literature 2 discloses compound oxide particles for providing a coating solution for forming a hard-coat film that has a high refractive index, that is excellent in transparency, is excellent in hot-water resistance, weatherability, scratch resistance, abrasion resistance, and dyeability, that has no photochromic properties, and that is excellent in adhesion to substrates, and a substrate with a hard-coat film, the substrate having, on a surface thereof, a hard-coat film with such excellent characteristics. Specifically, disclosed are compound oxide particles composed of iron oxide, titanium oxide, and silica, in which when iron oxide is converted to $Fe_2O_3$, titanium oxide is converted to $TiO_2$, and silica is converted to $SiO_2$, a weight ratio $Fe_2O_3/TiO_2$ is in a range of 0.0005 or more and less than 0.005, and a weight ratio $SiO_2/(Fe_2O_3 + TiO_2)$ is in a range from 0.001 to 1.0.

CITATION LIST

PATENT LITERATURES

Patent Literature 1: JP-H05-002102A
Patent Literature 2: JP-H11-172152A

SUMMARY OF THE INVENTION

PROBLEM TO BE SOLVED BY THE INVENTION

An object of the invention is to provide titanium oxide particles having low photocatalytic activity.

MEANS FOR SOLVING THE PROBLEM

According to an aspect of the invention, there is provided titanium oxide particles satisfying all of requirements (1) to (3) below:

(1) the titanium oxide particles have a rutile crystal structure,
(2) a unit cell of the crystal structure satisfies at least one of (a) or (b) below,

(a) an a-axis (a) has a length of 0.4594 nm or more,

(b) a c-axis has a length of 0.2959 nm or more,

(3) the titanium oxide particles have an energy gap of 2.90 eV or less.

The invention can provide titanium oxide particles having low photocatalytic activity.

BRIEF DESCRIPTION OF DRAWINGS

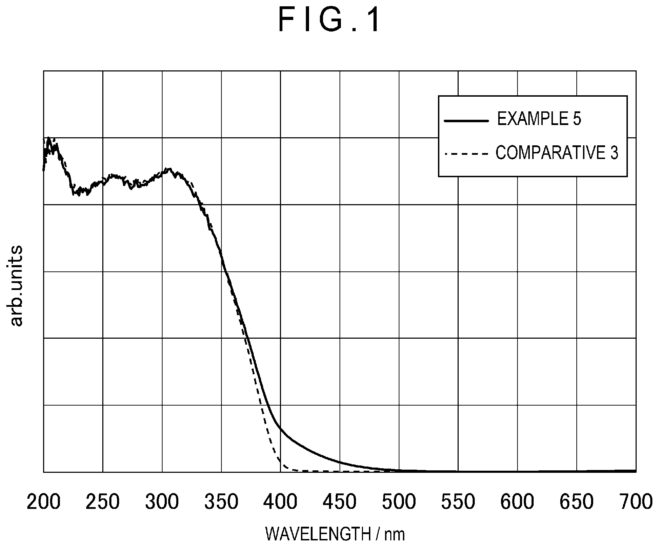

Fig. 1 is a graph representing ultraviolet-visible absorption spectra of titanium oxide obtained in Example 5 and Comparative Example 3.

DESCRIPTION OF EMBODIMENTS

Definitions

The term "crystal radius" as used herein means the "Crystal Radius" described in Acta Crystallographica. (1976). A32, Pages 751 to 767, unless otherwise specified. Note that the values of crystal radius vary depending on the valence and the coordination number of the element. Accordingly, in the present Description, a crystal radius determined by using the valence of an element contained in a raw material and setting the coordination number to 6 is used.

The expression "the unit cell is distorted in the positive direction" as used herein means that at least one of the value of the a-axis or the value of the c-axis increases with reference to the values of the a-axis and the c-axis of rutile titanium oxide described in 01-078-1509 : ICDD (PDF-2/Release 2012 RDB), unless otherwise specified.

The invention relates to titanium oxide particles. The titanium oxide particles according to the invention will be described in detail below.

Titanium oxide particles

According to an exemplary embodiment of the invention, titanium oxide particles according to the invention satisfy all of requirements (1) to (3) below.

(1) The titanium oxide particles have a rutile crystal structure.
(2) A unit cell of the crystal structure satisfies at least one of (a) or (b) below.

(a) An a-axis has a length of 0.4594 nm or more.
(b) A c-axis has a length of 0.2959 nm or more.

(3) The titanium oxide particles have an energy gap of 2.90 eV or less.

The titanium oxide particles according to the invention have the rutile crystal structure. Titanium oxide having the rutile crystal structure has photocatalytic activity lower than that of titanium oxide having other crystal structures (for example, anatase form). In addition, titanium oxide particles having the rutile crystal structure have a refractive index higher than that of titanium oxide particles having other crystal structures, and thus can be suitably used as, for example, optical materials. The crystal structure of the titanium oxide particles according to the invention can be determined by X-ray diffractometry.

When an element having a crystal radius different from the crystal radius of Ti included in the crystal structure is dissolved as a solid solution in the titanium oxide particles according to the invention, the unit cell of the crystal structure is distorted. In general, solid solutions are classified into substitutional solid solutions and interstitial solid solutions. The titanium oxide particles according to the invention may be in the form of either a substitutional solid solution or an interstitial solid solution. In general, when a specific element is dissolved as a solid solution in an inorganic compound, the unit cell of the crystal structure is distorted in the positive or negative direction depending on the crystal radius of the element. The direction in which the crystal structure is distorted does not depend on the crystal radius of the element alone but is determined by various factors such as the electron configuration of the element and loss of other elements due to charge compensation. In the invention, the unit cell is distorted in the positive direction.

In the titanium oxide particles according to the invention, the unit cell of the rutile crystal structure satisfies at least one of (a) or (b) below.

(a) The a-axis has a length of 0.4594 nm or more.
(b) The c-axis has a length of 0.2959 nm or more.

The titanium oxide particles according to the invention have a unit cell distorted in the positive direction and have an energy gap described later in the bandgap of titanium oxide. Thus, photocatalytic activity is inhibited by the synergetic effect. The reason for this is not necessarily clear but may be as follows. The distance between atoms included in the crystal structure expands, and, in the bandgap of ordinary titanium oxide particles having the rutile crystal structure, another discontinuous energy level is present, and consequently, electron transfer necessary for exhibiting a photocatalytic reaction is inhibited. In the titanium oxide particles according to the invention, the a-axis preferably has a length in a range from 0.4600 nm to 0.4700 nm, more preferably in a range from 0.4610 nm to 0.4690 nm. In the titanium oxide particles according to the invention, the c-axis preferably has a length in a range from 0.2960 nm to 0.3100 nm, more preferably in a range of 0.2960 nm or more and less than 0.3090 nm. It is preferable to satisfy at least one of the preferred range of the a-axis or the preferred range of the c-axis.

The titanium oxide particles according to the invention have an energy gap of 2.90 eV or less. The titanium oxide particles according to the invention have an energy gap at a position lower than the energy level of ordinary titanium oxide particles, and the unit cell is distorted in the positive direction. Thus, the photocatalytic activity is inhibited. The titanium oxide particles according to the invention preferably have an energy gap in a range from 1 eV to 2.90 eV, and preferably have an energy gap in a range from 1.5 eV to 2.80 eV. In the titanium oxide particles according to the invention having such an energy gap, the photocatalytic activity is further inhibited.

In the titanium oxide particles according to the invention, at least one element M1 selected from Al, Mg, Nd, Zn, Nb, Sb, Mo, Zr, and Hf is preferably dissolved as a solid solution in the crystal structure. When these elements are dissolved as a solid solution in the crystal structure, the energy gap also changes. In the titanium oxide particles according to the invention in which these elements are dissolved as a solid solution, the unit cell of the crystal structure is more likely to be distorted. M1 is more preferably at least one element selected from Al, Mg, Nd, Zr, and Hf, particularly preferably at least one element selected from Zr, Al, Mg, and Nd. In particular, when at least one element selected from Zr, Al, Mg, and Nd is dissolved as a solid solution, titanium oxide particles having high transparency and lower photocatalytic activity are provided.

The content of M1 contained in the titanium oxide particles according to the invention is preferably in a range from 1 mol% to 25 mol%, more preferably in a range from 1 mol% to 20 mol%, and particularly preferably in a range from 1 mol% to 15 mol% in terms of mol% relative to Ti. When the content of M1 is within the above range, titanium oxide particles having a high refractive index and lower photocatalytic activity are provided.

In the titanium oxide particles according to the invention, at least one element M2 selected from Ni, Mn, Cu, Fe, Co, V, Cr, Rh, and Ir is preferably dissolved as a solid solution in the crystal structure. The titanium oxide particles according to the invention in which these elements are dissolved as a solid solution are likely to have an energy gap at a position lower than the energy level of ordinary titanium oxide particles having the rutile crystal structure. M2 is more preferably at least one element selected from Ni, Mn, Cu, and Fe. In particular, when at least one element selected from Ni, Mn, Cu, and Fe is dissolved as a solid solution, titanium oxide particles having lower photocatalytic activity are provided.

The content of M2 contained in the titanium oxide particles according to the invention is preferably in a range from 0.05 mol% to 5 mol%, more preferably in a range from 0.1 mol% to 3 mol%, and particularly preferably in a range from 0.5 mol% to 1.5 mol% in terms of mol% relative to Ti. When the content of M2 is within the above range, titanium oxide particles having a high refractive index and lower photocatalytic activity are provided.

A molar ratio (M1/M2) of M1 to M2 contained in the titanium oxide particles according to the invention is preferably more than 1, more preferably in a range from 3 to 20, and particularly preferably in a range from 5 to 15. When the molar ratio of M1 to M2 is within the above range, titanium oxide particles having lower photocatalytic activity can be provided.

The titanium oxide particles according to the invention preferably contain at least one element selected from Sn, Si, Na, and K. Sn has a function of enhancing crystallinity of titanium oxide particles and inhibits formation of the crystal structure other than the rutile form, such as the anatase form. This further inhibits photocatalytic activity of the titanium oxide particles according to the invention and also increases transparency. The Sn content is preferably in a range from 1 mol% to 15 mol%, more preferably in a range from 3 mol% to 13 mol%, and particularly preferably in a range from 5 mol% to 10 mol% in terms of mol% relative to Ti. Si can further inhibit photocatalytic activity of titanium oxide particles and can also improve dispersibility of titanium oxide particles in solvents. The Si content is preferably in a range from 5 mol% to 50 mol%, more preferably in a range from 7 mol% to 40 mol%, and particularly preferably in a range from 10 mol% to 35 mol% in terms of mol% relative to Ti. Na and K (alkali metals) keep the balance of charges generated by the dissolution of M1 and M2 as a solid solution and can also improve dispersibility of titanium oxide particles in solvents. The alkali metal content is preferably in a range from 1 mol% to 10 mol%, more preferably in a range from 2 mol% to 8 mol%, and particularly preferably in a range from 3 mol% to 7 mol% in terms of mol% relative to Ti.

The titanium oxide particles according to the invention preferably have a Sn/M1 molar ratio of 3 or less, more preferably 2 or less, and particularly preferably 1.5 or less. A decrease in Sn relative to M1 accelerates the dissolution of M1 as a solid solution in the crystal structure. A Si/M1 molar ratio is preferably in a range from 0.5 to 10, more preferably in a range from 1 to 8, and particularly preferably in a range from 1.5 to 7. When the molar ratio is within the above range, the distortion of the unit cell of the crystal is likely to increase in the positive direction.

The Ti content in the titanium oxide particles according to the invention is preferably in a range from 40 mass% to 95 mass%, more preferably in a range from 50 mass% to 90 mass%, and particularly preferably in a range from 60 mass% to 85 mass% in terms of $TiO_2$ relative to the total amount of titanium oxide particles. When the Ti content is within the above range, titanium oxide particles having a high refractive index and lower photocatalytic activity are provided.

The titanium oxide particles according to the invention preferably have a unit cell volume of $0.0625 \text{ nm}^3$ or more, more preferably in a range from $0.0625 \text{ nm}^3$ to $0.0685 \text{ nm}^3$, and particularly preferably in a range from $0.0630 \text{ nm}^3$ to $0.0680 \text{ nm}^3$. The unit cell volume is derived by using all the axial lengths (abc) and the axial angles ($\alpha\beta\gamma$) of the unit cell and thus can comprehensively represent the distortion of the crystal lattice. The titanium oxide particles according to the invention having a unit cell volume within the above range are titanium oxide particles having lower photocatalytic activity.

The titanium oxide particles according to the invention preferably have an average particle size in a range from 5 nm to 50 nm, more preferably in a range from 8 nm to 40 nm, and particularly preferably in a range from 10 nm to 30 nm. When the average particle size is within the above range, a dense coating film is easily formed in the formation of a coating film containing the titanium oxide particles according to the invention. In the invention, the value of the average particle size refers to the average of the sizes of primary particles measured using an electron microscope.

The refractive index of the titanium oxide particles according to the invention is preferably 1.8 or more, more preferably 2 or more, and particularly preferably 2.1 or more. The titanium oxide particles according to the invention having such a high refractive index can be suitably used for an optical material. The upper limit of the refractive index is not particularly limited and may be 3 or less.

The titanium oxide particles according to the invention may include a covering layer formed on the surfaces thereof. For example, the formation of a covering layer containing at least one element selected from Zr, Si, Al, etc. can further reduce photocatalytic activity of the titanium oxide particles according to the invention. In particular, the formation of a covering layer containing one or both of Si and Zr can further reduce photocatalytic activity and tends to provide good dispersibility in polar solvents such as water and alcohols.

The titanium oxide particles according to the invention may have surfaces modified with an organosilicon compound. Consider a case where the surfaces are modified with an organosilicon compound. When a liquid dispersion or a coating solution for coating film formation, which will be described later, is produced, dispersibility in a resin and an organic solvent component contained in the liquid is improved. In a case where a covering layer is formed on the surfaces of the titanium oxide particles according to the invention, the surfaces of the covering layer may be subjected to surface modification with an organosilicon compound.

Liquid dispersion containing titanium oxide particles

The titanium oxide particles according to the invention may be in the form of a powder or a liquid dispersion in which the titanium oxide particles are dispersed in a solvent. In the case of a liquid dispersion, the liquid dispersion may be an aqueous liquid dispersion, a liquid dispersion of water and an organic solvent, or a liquid dispersion of an organic solvent. For a liquid dispersion containing an organic solvent as a dispersion medium, for example, part or the whole of water contained in the liquid dispersion may be substituted with an organic solvent using a rotary evaporator, an ultrafiltration membrane, or another known technique.

Examples of organic solvents that can be used for a liquid dispersion containing the titanium oxide particles according to the invention include:

alcohols such as methanol, ethanol, ethylene glycol, 1-propanol, 2-propanol, 1-butanol, 2-butanol, and octanol;
esters such as ethyl acetate, butyl acetate, ethyl lactate, propylene glycol monomethyl ether acetate, propylene glycol monoethyl ether acetate, and $\gamma$-butyrolactone;
ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diethylene glycol monoethyl ether;
ketones such as acetone, methyl ethyl ketone, methyl isobutyl ketone, acetylacetone, and cyclohexanone;
aromatic hydrocarbons such as benzene, toluene, xylene, and ethylbenzene;
cyclic hydrocarbons such as cyclohexane; and
amides such as dimethylformamide, N,N-dimethylacetoacetamide, and N-methylpyrrolidone. These organic solvents may be used alone or in combination of two or more thereof.

The surfaces of the titanium oxide particles according to the invention may be treated with an organic amine compound or a carboxylic acid compound instead of an organosilicon compound.

Examples of the organic amine compound include:

ammonia; alkylamines such as ethylamine, triethylamine, isopropylamine, diisopropylamine, and n-propylamine;

aralkylamines such as benzylamine;

alicyclic amines such as piperidine;

alkanolamines such as monoethanolamine and triethanolamine; and

quaternary ammonium salts and quaternary ammonium hydroxides such as tetramethylammonium salts and tetramethylammonium hydroxide. Of these, an alkylamine, a quaternary ammonium hydroxide, or the like is preferably used. These organic amine compounds may be used alone or in combination of two or more thereof.

The method for performing modification by treating the surfaces of the titanium oxide particles may be a publicly known method. For example, when an alkylamine is used as the organic amine compound, the surfaces of the titanium oxide fine particles can be modified by adding the alkylamine to an aqueous liquid dispersion of the titanium oxide particles, and then heating the resulting aqueous liquid dispersion to a temperature of about 40 degrees C to 90 degrees C and performing stirring for about 1 hour to 20 hours to bind the alkylamine to the surfaces of the fine particles. In this case, at the time when the operation of the surface modification (that is, a type of surface treatment) is finished, all the amine groups of the organic amine compound are preferably bound to OH groups present on the surfaces of a covering layer of the titanium oxide particles. However, some of the amine groups may remain unreacted.

Surface-modified titanium oxide particles prepared in this manner are typically obtained as a liquid dispersion containing the particles. If necessary, water contained in the liquid dispersion may be substituted with an organic solvent such as an alcohol, e.g., methanol, ethanol, or propanol; a ketone, e.g., methyl ethyl ketone or acetylacetone; an ester, e.g., ethyl acetate or butyl acetate; or a cellosolve, e.g., ethyl cellosolve or butyl cellosolve using an ultrafiltration device or the like.

Titanium oxide particle-containing coating solution for coating film formation

The liquid dispersion containing the titanium oxide particles according to the invention can also be formed into a coating solution for coating film formation by adding a matrix-forming component. The matrix-forming component may be a matrix-forming component used for a typical coating solution for coating film formation. Examples of the matrix-forming component include tetramethoxysilane, tetraethoxysilane, methyltrimethoxysilane, ethyltriethoxysilane, methyltriethoxysilane, phenyltriethoxysilane, dimethyldimethoxysilane, phenylmethyldimethoxysilane, vinyltrimethoxysilane, vinyltriethoxysilane, vinyltris($\beta$-methoxyethoxy)silane, $\gamma$-glycidoxypropyltrimethoxysilane, $\gamma$-glycidoxypropyltriethoxysilane, $\gamma$-glycidoxypropylmethyldimethoxysilane, $\gamma$-glycidoxypropylmethyldiethoxysilane, $\beta$-(3,4-epoxycyclohexyl)ethyltrimethoxysilane, $\gamma$-methacryloxypropyltrimethoxysilane, N-$\beta$(aminoethyl) $\gamma$-aminopropyltrimethoxysilane, N-$\beta$(aminoethyl) $\gamma$-aminopropylmethyldimethoxysilane, $\gamma$-aminopropyltriethoxysilane, N-phenyl-y-aminopropyltrimethoxysilane, and $\gamma$-mercaptopropyltrimethoxysilane. These may be used alone or in combination of two or more thereof.

Coating film and substrate with coating film that contain titanium oxide particles

By using a liquid dispersion containing the titanium oxide particles according to the invention, a coating film can be formed on a substrate made from glass, plastic, or the like to provide a substrate with the coating film. This substrate with the coating film can be used as eyeglass lenses, various optical lenses such as lenses for cameras, front panels for optical displays, show window cases, window glasses, contact glasses for copiers, light covers for automobiles, and optical substrates such as various ultraviolet shielding filters. The titanium oxide particles according to the invention have low photocatalytic activity while having UV absorption performance; therefore, a coating film having high weatherability can be obtained in any of the exemplary embodiments. The film thickness is not particularly limited. If a high coating film strength is desired, the film thickness is preferably 0.5 $\mu$m or more, more preferably 1 $\mu$m or more, and particularly preferably 2 $\mu$m or more. The upper limit of the film thickness is not particularly limited, and may be 100 $\mu$m or less, 50 $\mu$m or less, or 30 $\mu$m or less. If the coating film strength needs not be increased, the film thickness may be less than 0.5 $\mu$m, less than 0.3 $\mu$m, or less than 0.1 $\mu$m. The coating film containing the titanium oxide particles according to the invention has high weatherability even in the case of a small film thickness.

Method for producing titanium oxide particles

The titanium oxide particles according to the invention can be prepared by, for example, a production method including steps (1) to (3) below. The method for producing the titanium oxide particles according to the invention is not limited to the following production method.

(1) Coprecipitated gel preparation step
(2) Hydrothermal-processing precursor preparation step
(3) Hydrothermal processing step

Hereinafter, an example of the method for producing the titanium oxide particles according to the invention will be described in detail.

## (1) Coprecipitated gel preparation step

This step is a step of neutralizing an aqueous solution containing Ti, M1, and M2 to prepare a coprecipitated gel containing Ti, M1, and M2. The preparation of a coprecipitated gel containing Ti, M1, and M2 accelerates dissolution of M1 and M2 as a solid solution in the crystal structure of titanium oxide particles that are finally obtained. The aqueous solution and the coprecipitated gel may contain elements other than M1 and M2.

The aqueous solution containing Ti, M1, and M2 can be prepared by dissolving a Ti source, an M1 source, and an M2 source in water. As the Ti source, publicly known raw materials such as titanium tetrachloride, titanium sulfate, and titanium alkoxides can be used. As the M1 source and the M2 source, publicly known raw materials such as chlorides, carbonates, and nitrates can be used. In addition, when the aqueous solution containing Ti, M1, and M2 further contains an element other than M1 and M2, publicly known raw materials such as chlorides, carbonates, and nitrates containing this element can be used. These raw materials are preferably water-soluble raw materials. If the raw materials are not water-soluble, the raw materials are preferably particles that are fine enough to be uniformly dispersed in water. The pH of the aqueous solution containing Ti, M1, and M2 is preferably 3 or less.

In this step, an alkali with a pH of 10 or more can be used to neutralize the aqueous solution containing Ti, M1, and M2. For example, an aqueous alkali solution in which sodium hydroxide, potassium hydroxide, ammonia, or the like is dissolved in water can be used. The aqueous solution containing Ti, M1, and M2 and the aqueous alkali solution are mixed so that the pH is 4 or more to generate a coprecipitated gel containing Ti, M1, and M2. This coprecipitated gel can be recovered by filtration and may be washed with water or the like as necessary.

## (2) Hydrothermal-processing precursor preparation step

This step is a step of redispersing (deflocculating) the coprecipitated gel obtained in the above-described step in water to prepare a hydrothermal-processing precursor. In this step, after the coprecipitated gel is deflocculated, M1, M2, and other elements can be added.

The method for deflocculating the coprecipitated gel may be a publicly known method. Examples of the method that can be used include a method in which the coprecipitated gel is dispersed in water and subjected to an ultrasonic treatment and a method in which the coprecipitated gel is dispersed in water using an acid or an alkali. Alternatively, deflocculation may be caused using hydrogen peroxide water. In this case, the amount of water is preferably adjusted so that the concentration of the solid in the hydrothermal-processing precursor that is finally obtained is 10 mass% or less.

The average particle size of the solid contained in the hydrothermal-processing precursor obtained in this step is preferably in a range from 5 nm to 300 nm, more preferably in a range from 10 nm to 200 nm, and particularly preferably in a range from 15 nm to 150 nm. An increase in the average particle size of the solid contained in the coprecipitated gel aqueous liquid dispersion tends to also increase the average particle size of titanium oxide that is finally obtained.

## (3) Hydrothermal processing step

This step is a step of subjecting the hydrothermal-processing precursor obtained in the above-described step to hydrothermal processing to prepare rutile titanium oxide particles in which M1 and M2 are dissolved as a solid solution.

In this step, the hydrothermal-processing precursor can be subjected to hydrothermal processing using a publicly known device such as an autoclave. The temperature of the hydrothermal processing is preferably in a range from 100 degrees C to 250 degrees C, more preferably in a range from 120 degrees C to 220 degrees C, and particularly preferably in a range from 130 degrees C to 210 degrees C. The holding time in the above temperature range is preferably in a range from 1 hour to 48 hours, more preferably in a range from 5 hours to 24 hours, and particularly preferably in a range from 10 hours to 20 hours.

Titanium oxide according to the invention is contained in the liquid after the hydrothermal processing and may be subjected to separation, washing, etc. as needed. The separated titanium oxide can be calcined to enhance the crystallinity thereof.

When a covering layer is formed on the surfaces of the titanium oxide particles according to the invention, the covering layer can be formed by, for example, the method described in JP2009-155496A. In addition, when the titanium oxide particles according to the invention are dispersed in an organic solvent or a solution containing a resin dispersed therein, the surfaces of the titanium oxide particles or the surfaces of the covering layer can be subjected to hydrophobization treatment (surface treatment) by the method described in JP2009-155496A.

Method for producing liquid dispersion containing titanium oxide particles

A liquid dispersion containing titanium oxide particles according to the invention can be prepared by a method for dispersing titanium oxide particles according to the invention in a solvent. The method for dispersing the titanium oxide particles in a solvent may be a publicly known method. For example, when the titanium oxide particles according to the invention is in the powder form, the liquid dispersion can be prepared by adding the titanium oxide particles to water, an organic solvent, or the like, and then performing dispersion treatment such as bead mill treatment or ultrasonic treatment. In this case, when the concentration of the solid in the liquid dispersion is 50 mass% or less, the titanium oxide particles according to the invention are more easily dispersed in the solvent. It is also possible to measure the zeta-potential of the titanium oxide particles according to the invention and adjust the pH to a range suitable for dispersion.

If an organic solvent is used as the solvent of the liquid dispersion containing the titanium oxide particles according to the invention, the above-described organic solvents can be used.

Method for producing titanium oxide particle-containing coating solution for coating film formation

A titanium oxide particle-containing coating solution for coating film formation according to the invention can be prepared by a publicly known method using the titanium oxide particles according to the invention. For example, the coating solution can be prepared by adding components necessary for forming a coating film to the liquid dispersion described above. The coating solution for coating film formation may be a coating solution for thermally curable coating film formation or a coating solution for photocurable coating film formation.

In a case of a coating solution for thermally curable coating film formation, the coating solution can be prepared by adding a matrix-forming component, and as necessary, a curing catalyst for thermal curing, an additive, or the like to the liquid dispersion containing the titanium oxide particles according to the invention. The coating solution can be produced, for example, based on the description in JP2000-204301A.

In a case of a coating solution for photocurable coating film formation, the coating solution can be prepared by adding a matrix-forming component, and as necessary, a curing catalyst for photocuring, an additive, or the like to the liquid dispersion containing the titanium oxide particles according to the invention. The coating solution can be produced, for example, based on the description in JP2009-056387A.

Examples of the matrix-forming component include those described above.

Examples of usable curing catalysts for thermal curing include:

amines such as n-butylamine, triethylamine, guanidine, and biguanidide; amino acids such as glycine; metal acetylacetonates such as aluminum acetylacetonate, chromium acetylacetonate, titanyl acetylacetonate, and cobalt acetylacetonate;

organic acid metal salts such as sodium acetate, zinc naphthenate, cobalt naphthenate, zinc octylate, and tin octylate; perchloric acid and salts thereof such as perchloric acid, ammonium perchlorate, and magnesium perchlorate; acids such as hydrochloric acid, phosphoric acid, nitric acid, and p-toluenesulfonic acid; and metal chlorides which are Lewis acids such as $SnCl_2$, $AlCl_3$, $FeCl_3$, $TiCl_4$, $ZnCl_2$, and $SbCl_3$. These may be used alone or in combination of two or more thereof.

Examples of usable curing catalysts for photocuring include bis(2,4,6-trimethylbenzoyl)phenylphosphine oxide, bis(2,6-dimethoxybenzoyl)-2,4,4-trimethyl-pentylphosphine oxide, 2-hydroxy-methyl-2-methyl-phenyl-propane-1-ketone, 2,2-dimethoxy-1,2-diphenylethan-1-one, 1-hydroxy-cyclohexylphenyl-ketone, and 2-methyl-1-[4-(methylthio)phenyl]-2-morpholinopropan-1-one. These may be used alone or in combination of two or more thereof.

Examples of additives that can be used include surfactants, leveling agents, ultraviolet absorbers, light stabilizers, diluting solvents, preservatives, antifouling agents, antimicrobial agents, antifoaming agents, ultraviolet degradation inhibitors, and dyes. These may be used alone or in combination of two or more thereof.

Method for producing substrate with coating film containing titanium oxide particles

A substrate with a coating film containing the titanium oxide particles according to the invention can be prepared by a publicly known method using a substrate and the coating solution for coating film formation described above.

Examples of substrates include various substrates made from glass, plastic, or the like. Specific examples thereof include plastic substrates used as optical lenses or the like.

The film thickness of the coating film formed on the substrate varies depending on the usage of the substrate with the coating film. If a high coating film strength is desired, the film thickness is preferably 0.5 $\mu$m or more, more preferably 1 $\mu$m or more, and particularly preferably 2 $\mu$m or more.

The upper limit of the film thickness is not particularly limited, and may be 100 $\mu$m or less, 50 $\mu$m or less, or 30 $\mu$m or less. If

the coating film strength needs not be increased, the film thickness may be less than 0.5 $\mu$m, less than 0.3 $\mu$m, or less than 0.1 $\mu$m.

When a substrate with a coating film containing the titanium oxide particles according to the invention is prepared using the above-described coating solution for thermally curable coating film formation, the production can be performed, for example, based on the description in JP2000-204301A. In a case of using the above-described coating solution for photocurable coating film formation, the coating solution can be produced, for example, based on the description in JP2009-056387A. The substrate can be prepared by a method including applying the coating solution for coating film formation to a substrate by a publicly known method such as a dipping method, a spray method, a spinner method, a roll coating method, or a bar coater method, performing drying, and curing the resulting coating film by, for example, heat treatment or ultraviolet irradiation.

In producing the substrate with a coating film according to the invention, the surface of the substrate may be pretreated, for example, treated with an alkali, an acid, or a surfactant, polished with inorganic or organic fine particles, or treated with a primer or plasma in order to enhance the adhesion between the substrate, for example, a plastic substrate, and the coating film. Examples

The invention will be described in more detail below with reference to Examples. However, the invention is not limited to such Examples.

Measurement methods or evaluation methods

Measurements or evaluations were performed as described below.

[1] Average particle size

The shape of a measurement sample (inorganic oxide particles such as titanium oxide particles) was observed with a scanning electron microscope (SEM) (S-5500, manufactured by Hitachi High-Tech Corporation) at an accelerating voltage of 30 kV. The sample for observation was prepared as follows. An aqueous dispersion sol containing a measurement sample (inorganic oxide particles such as titanium oxide particles) was diluted with water to a solid concentration of 0.05 mass%. The diluted dispersion sol was then applied to a metal grid with a collodion film (manufactured by Okenshoji Co., Ltd.) and was irradiated with a 250 W infrared lamp for 30 minutes to evaporate the solvent. The sample for observation was thus prepared. The obtained SEM image was printed, the particle sizes of 100 primary particles were measured with a vernier caliper, and the average value thereof was defined as an average particle size. It should be noted that, when the shape of particles was anisotropic, the length of the major axis of each of the particles was determined to be the particle size.

[2] Solid concentration

The solvent of a liquid dispersion containing a measurement sample (inorganic oxide particles such as titanium oxide particles) was removed by, for example, infrared irradiation, and the residue was then calcined at 1,000 degrees C for one hour to obtain an ignition residue (solid). The ratio of the mass of the ignition residue to the mass of the sample was calculated as the solid concentration.

[3] Method for determining particle composition

Titanium, tin, neodymium, silicon, iron, and niobium

An aqueous liquid dispersion containing a measurement sample (inorganic oxide particles such as titanium oxide particles) was placed into a zirconia crucible, and water was removed by infrared irradiation. Subsequently, $Na_2O_2$ and NaOH were added to the resulting dry residue, and the mixture was heated and melted. Sulfuric acid and hydrochloric acid were further added to the resulting melt, and water was added for dilution.

The amounts of titanium, tin, neodymium, silicon, iron, and niobium in terms of oxide ($TiO_2$, $SnO_2$, $Nd_2O_3$, $SiO_2$, $Fe_2O_3$, and $Nb_2O_5$) in the resulting solution were measured by using an ICP apparatus (ICPS-8100, manufactured by Shimadzu Corporation). The contents were each calculated as a ratio relative to the total amount of the measurement sample contained in the aqueous liquid dispersion.

Magnesium, aluminum, zirconium, nickel, manganese, and copper

An aqueous liquid dispersion containing a measurement sample (inorganic oxide particles such as titanium oxide particles) was placed onto a platinum dish, and hydrofluoric acid and sulfuric acid were added thereto. The resulting mixture was heated, and water was then added thereto to dissolve the inorganic oxide particles. The resulting solution was further diluted with water, and the amounts of magnesium, aluminum, zirconium, nickel, manganese, and copper in terms of oxide (MgO, $Al_2O_3$, $ZrO_2$, NiO, MnO, and CuO) were measured by using an ICP apparatus (ICPS-8100, manufactured by Shimadzu Corporation). The contents were each calculated as a ratio relative to the total amount of the measurement sample contained in the aqueous liquid dispersion.

(Potassium)

An aqueous liquid dispersion containing a measurement sample (inorganic oxide particles such as titanium oxide particles) was placed onto a platinum dish, and hydrofluoric acid and sulfuric acid were added thereto. The resulting mixture was heated, and water was then added thereto to dissolve the inorganic oxide particles. The resulting solution was further diluted with water, and the amount of potassium in terms of oxide ($K_2O$) was measured by using an atomic absorption apparatus (Z-5300, manufactured by Hitachi, Ltd.). The content was calculated as a ratio relative to the total amount of the measurement sample contained in the aqueous liquid dispersion.

[4] Analysis of crystal structure of particles

An aqueous liquid dispersion containing a measurement sample (inorganic oxide particles such as titanium oxide particles) was placed into a porcelain crucible (model: B-2) in an amount corresponding to a solid weight of 2 g and dried at 110 degrees C for 12 hours. The residue was then placed in a desiccator and was cooled to room temperature. Next, the residue and a small amount of strontium titanate (manufactured by Kojundo Chemical Laboratory Co., Ltd.) were mixed, and the mixture was ground for 15 minutes. Subsequently, powder X-ray diffraction was measured by using an X-ray diffractometer SmartLab (manufactured by Rigaku Corporation). For the obtained diffraction pattern, the peak positions were specified using software of PDXL2 version 2.7.2.0, and correction was performed so that the peak ($2\theta$) derived from a (110) plane of strontium titanate mixed in a small amount was 32.374 deg. Details of the measurement conditions and data analysis were as follows.

Measurement conditions

Measurement apparatus: Powder X-ray diffractometer SmartLab (manufactured by Rigaku Corporation)
X-ray generator: 9 kW open tube (CuK$\alpha$-ray source, voltage 45 kV, current 200 mA)
Soller/PSC: 5.0 deg
IS longitudinal dimension: 10.0 mm
PSA: none
Soller: 5.0 deg
IS: 1/2
RS1: 13 mm
RS2: 20 mm
Scan step: 0.02 deg
Scan range: 5 to 70 deg
Scan speed: 5 deg/min
X-ray detector: high-speed one-dimensional X-ray detector (D/TeX Ultra 250)
Measurement atmosphere: in air
Sample stage: sample holder made of $Al_2O_3$ (without bottom)

Data analysis

Analysis software: Integrated powder X-ray analysis software PDXL2 Version 2.7.2.0 (manufactured by Rigaku Corporation)
Smoothing: smoothing by B-Splne (X threshold 1.5)
Background removal: fitting method
K$\alpha$2 removal: intensity ratio 0.497
Peak search: quadratic differential, $\sigma$ cut value = 3, $\sigma$ cut range 0.5 to 20.0
Profile-fitting method: fitting on measurement data

Profile fitting peak shape: split pseudo-Voigt function

From the interplanar spacings of a (110) plane and a (101) plane of the diffraction peaks derived from the rutile crystal structure obtained as described above, the length of the a-axis and the length of the c-axis of the unit cell of titanium oxide particles having the rutile crystal structure, and the volume of the unit cell were determined.

[5] Evaluation of effect of inhibiting photocatalytic activity of titanium oxide particles (measurement of color fading speed)

To a liquid dispersion of titanium oxide particles, a solvent was appropriately added so that the mass concentration of $TiO_2$ was 0.335% and the water/methanol was 1/1 (mass ratio). Subsequently, a sample was prepared by mixing the resulting liquid dispersion together with a glycerin solution of Sunset Yellow FCF dye having a solid concentration of 0.02 mass% so that the mass ratio (mass of liquid dispersion/mass of glycerin solution) was 1/3. The sample was placed in a quartz cell having a depth of 1 mm, a width of 1 cm, and a height of 5 cm. Next, a surface (1 cm in width × 5 cm in height) of the quartz cell was irradiated with ultraviolet rays using an ultraviolet lamp (LUV-6, manufactured by AS ONE Corporation) whose wavelength range was set at the i-line (wavelength 365 nm) at a distance adjusted so that the intensity was 0.4 mW/cm$^2$ (in terms of 365 nm wavelength).
An absorbance (A0) at a wavelength of 490 nm of the sample before ultraviolet irradiation and an absorbance (An) at a wavelength of 490 nm of the sample after ultraviolet irradiation for n hours were measured with an ultraviolet-visible light spectrophotometer (V-750, manufactured by JASCO Corporation). The color fading rate of the dye (SY color fading rate) after UV irradiation for three hours was calculated from the following formula.

$$\text{Color fading rate} = (An - A0)/A0 \times 100 \, (\%)$$

[6] Method for measuring particle refractive index

A plurality of coating films having different ratios of titanium oxide particles and a matrix were prepared by the method described in paragraphs [0105] to [0110] in JP2010-168266A. A reflectance spectrum of each of the coating films was measured using an optical measuring device (USPM-RU III, manufactured by Olympus Corporation), and the refractive index was calculated. The particle refractive index was calculated from the refractive index of each of the coating films.

[7] Evaluation of absorption due to energy gap

A liquid dispersion of titanium oxide particles was taken in such an amount that 0.5 g of a solid could be taken, and the liquid dispersion was dried at a temperature of 110 degrees C for 12 hours to obtain a solid. This solid was then ground in an agate mortar for five minutes so that coarse particles did not remain to prepare a measurement sample powder.
First, a diffuse reflectance spectrum of a standard white plate for an integrating sphere (6916-H422A, manufactured by JASCO Corporation) was measured using an ultraviolet-visible light spectrophotometer with an integrating sphere (V-670, manufactured by JASCO Corporation), and this spectrum was used as a baseline. Subsequently, the measurement sample powder was placed in a sample holder with a quartz window, and a diffuse reflectance spectrum was measured in the same manner using the above baseline. The obtained diffuse reflectance spectrum was converted to an ultraviolet-visible absorption spectrum by Kubelka-Munk conversion. The ultraviolet-visible absorption spectrum obtained in this manner was normalized so that the maximum value of the absorption intensity was 1. The maximum wavelength at which the absorption intensity after normalization was 0.015 or more was defined as the absorption edge wavelength, and the energy gap was determined by the following formula.

$$\text{Energy gap (eV)} = h\nu = hc/\lambda = 1240/\lambda$$

$\lambda$: absorption edge wavelength (nm))

Example 1

(1-1) Coprecipitated gel preparation step

An aqueous titanium tetrachloride solution (1,322 g) (manufactured by OSAKA Titanium technologies Co., Ltd.) containing 7.75 mass% of Ti in terms of $TiO_2$, 11.3 g of an aqueous ferric chloride solution (manufactured by TOAGOSEI Co., Ltd.) containing 7.75 mass% of Fe in terms of $Fe_2O_3$, and ammonia water (manufactured by UBE Corporation) containing 15 mass% of ammonia were mixed together to prepare a very pale yellow slurry having a pH of 9.5. Subsequently, the slurry was filtered, and the residue was then washed with water. Thus, 1,000 g of a coprecipitated gel 1 having a solid concentration of 10 mass% and containing Fe and Ti was obtained.

(1-2) Mg-containing slurry preparation step

An aqueous solution (312 g) of magnesium chloride hexahydrate (manufactured by KANTO CHEMICAL Co., Inc., Cica 1st grade) containing 7.75 mass% of Mg in terms of MgO, and an aqueous potassium hydroxide solution containing 7.5 mass% of potassium hydroxide (manufactured by KANTO CHEMICAL Co., Inc., Cica special grade) were mixed together to prepare a white slurry having a pH of 10.6. Subsequently, the slurry was filtered, and the residue was then washed with water. Thus, 115 g of a slurry having a solid concentration of 15.5% was obtained. This slurry was diluted with water again and dispersed to obtain 1,700 g of a Mg-containing slurry having a solid concentration of 1 mass%.

(2) Hydrothermal-processing precursor preparation step

Hydrogen peroxide water (199 g) (manufactured by MITSUBISHI GAS CHEMICAL COMPANY, INC.) containing 35 mass% of hydrogen peroxide and 657 g of water were added to 116 g of the coprecipitated gel obtained in the above-described step, stirring was then performed at 80 degrees C for one hour, and 188 g of water was further added thereto to obtain 1,160 g of a deflocculant of the coprecipitated gel 1. The deflocculant was clear orange, had a pH of 8.4, and had an average particle size of particles in the deflocculant (value calculated by the cumulant analysis from particle size distribution data obtained using a dynamic scattering method (ELS-Z, manufactured by Otsuka Electronics Co., Ltd.) of 56 nm.

A cation exchange resin (manufactured by Mitsubishi Chemical Corporation) was mixed with the deflocculant (1,160 g). Subsequently, 145 g of an aqueous potassium stannate solution containing 1 mass% of potassium stannate (manufactured by Showa Kako Corporation) in terms of $SnO_2$ was gradually added thereto under stirring.

After the cation exchange resin contained in the resulting deflocculant was separated, 18 g of a silica sol (average particle size 16 nm (value determined by a dynamic scattering method), specific surface area 375 $m^2$/g, pH 2.2, solid concentration 16 mass%) and 268 g of water were added thereto, and 29 g of the Mg-containing slurry prepared in the previous step and having a solid concentration of 1 mass% was further mixed to prepare 1,619 g of a hydrothermal-processing precursor.

(3) Hydrothermal processing step

The hydrothermal-processing precursor obtained in the above-described step was divided into small portions, placed in a high-pressure reaction decomposition vessel (HU-100, manufactured by SAN-AI KAGAKU Co., Ltd.), and heated at 165 degrees C for 18 hours. The resulting product was cooled to room temperature to collect a sol reaction product. The reaction product was concentrated with an ultrafiltration membrane device (SIP-0013, manufactured by Asahi Kasei Corporation). Thus, 150 g of a clear, pale yellow aqueous dispersion sol having a solid concentration of 10 mass% and a pH of 8.4 was obtained.

The particles contained in the obtained aqueous dispersion sol were titanium oxide particles having the rutile crystal structure and containing iron, magnesium, tin, silicon, and potassium. Properties of the titanium oxide particles determined by the above-described measurement methods or evaluation methods are shown in Table 1.

Example 2

(1) Coprecipitated gel preparation step

An aqueous titanium tetrachloride solution (1,598 g) (manufactured by OSAKA Titanium technologies Co., Ltd.) containing 7.75 mass% of Ti in terms of $TiO_2$, 14.4 g of an aqueous ferric chloride solution (manufactured by TOAGOSEI Co., Ltd.) containing 7.75 mass% of Fe in terms of $Fe_2O_3$, 179 g of an aqueous solution of neodymium(III) chloride hexahydrate (manufactured by FUJIFILM Wako Pure Chemical Corporation) containing 7.75 mass% of Nd in terms of $Nd_2O_5$, and ammonia water (manufactured by UBE Corporation) containing 15 mass% of ammonia were mixed together to prepare a pale yellow slurry having a pH of 9.5. Subsequently, the slurry was filtered, and the residue was then washed with water. Thus, 1,350 g of a coprecipitated gel 2 having a solid concentration of 10 mass% and containing Fe, Nd, and Ti was obtained.

(2) Hydrothermal-processing precursor preparation step

A deflocculant (1,160 g) of a coprecipitated gel was obtained as in Example 1 except that the coprecipitated gel 2 was used instead of the coprecipitated gel 1. The deflocculant was clear orange, had a pH of 7.5, and had an average particle size of particles in the deflocculant (value calculated by the cumulant analysis from particle size distribution data obtained using a dynamic scattering method (ELS-Z, manufactured by Otsuka Electronics Co., Ltd.) of 329 nm.
Subsequently, 1,590 g of a hydrothermal-processing precursor 2 was obtained in the same manner except that the Mg-containing slurry having a solid concentration of 1 mass% was not mixed.

(3) Hydrothermal processing step

A clear, pale yellow aqueous dispersion sol 2 (150 g) having a solid concentration of 10 mass% and a pH of 6.5 was obtained as in Example 1 except that the hydrothermal-processing precursor 2 was used instead of the hydrothermal-processing precursor 1.
The particles contained in the obtained aqueous dispersion sol were titanium oxide particles having the rutile crystal structure and containing iron, neodymium, tin, silicon, and potassium. Properties of the titanium oxide particles determined by the above-described measurement methods or evaluation methods are shown in Table 1.

Example 3

(2) Hydrothermal-processing precursor preparation step

A deflocculant (564 g) of the coprecipitated gel 1 obtained as in Example 1 was used and mixed with a cation exchange resin (manufactured by Mitsubishi Chemical Corporation). Subsequently, 73 g of an aqueous potassium stannate solution containing 1 mass% of potassium stannate (manufactured by Showa Kako Corporation) in terms of $SnO_2$ and 19 g of an aqueous sodium aluminate solution containing 1 mass% of sodium aluminate (manufactured by FUJIFILM Wako Pure Chemical Corporation, Wako 1st grade) in terms of $Al_2O_3$ were gradually added thereto under stirring.
After the cation exchange resin contained in the resulting deflocculant was separated, 9 g of a silica sol containing 0.4 mass% of aluminum in terms of $Al_2O_3$ (average particle size 16 nm (value determined by a dynamic scattering method), specific surface area 375 $m^2$/g, pH 2.2, solid concentration 16 mass%: prepared with reference to the method described in Example 1 "Preparation of silica sol" in JP2009-197078A) and 134g of water were added to prepare 800 g of a hydrothermal-processing precursor 3.

(3) Hydrothermal processing step

A clear, pale yellow aqueous dispersion sol 3 (80 g) having a solid concentration of 10 mass% and a pH of 6.7 was obtained in the same manner except that the hydrothermal-processing precursor 3 was used instead of the hydrothermal-processing precursor 1.
The particles contained in the obtained aqueous dispersion sol were titanium oxide particles having the rutile crystal structure and containing iron, aluminum, tin, silicon, aluminum, and potassium. Properties of the titanium oxide particles determined by the above-described measurement methods or evaluation methods are shown in Table 1.

Example 4

(1) Coprecipitated gel preparation step

An aqueous titanium tetrachloride solution (1,304 g) (manufactured by OSAKA Titanium technologies Co., Ltd.) containing 7.75 mass% of Ti in terms of $TiO_2$, 1.1 g of an aqueous solution of nickel chloride hexahydrate (manufactured by KANTO CHEMICAL Co., Inc., Cica 1st grade) containing 7.75 mass% of Ni in terms of NiO, 106 g of zirconium oxychloride (manufactured by TAIYO KOKO Co., Ltd.) containing 7.75 mass% of Zr in terms of $ZrO_2$, and ammonia water (manufactured by UBE Corporation) containing 15 mass% of ammonia were mixed together to prepare a very pale green slurry having a pH of 9.5. Subsequently, the slurry was filtered, and the residue was then washed with water. Thus, 1,000 g of a coprecipitated gel 4 having a solid concentration of 10 mass% and containing Ni, Zr, and Ti was obtained.

(2) Hydrothermal-processing precursor preparation step

The coprecipitated gel 4 (73 g) obtained in the above-described step was weighed, and 116 g of hydrogen peroxide water (manufactured by MITSUBISHI GAS CHEMICAL COMPANY, INC.) containing 35 mass% of hydrogen peroxide and 421 g of water were added thereto, stirring was then performed at 80 degrees C for one hour, and 118 g of water was further added thereto to obtain 720 g of a deflocculant 4 of the coprecipitated gel. The deflocculant was clear orange, had a pH of 8.3, and had an average particle size of particles in the deflocculant (value calculated by the cumulant analysis from particle size distribution data obtained using a dynamic scattering method (ELS-Z, manufactured by Otsuka Electronics Co., Ltd.) of 63 nm.

A cation exchange resin (manufactured by Mitsubishi Chemical Corporation) was mixed with the deflocculant (729 g). Subsequently, 91 g of an aqueous potassium stannate solution containing 1 mass% of potassium stannate (manufactured by Showa Kako Corporation) in terms of $SnO_2$ was gradually added thereto under stirring.

After the cation exchange resin contained in the resulting deflocculant was separated, 11 g of a silica sol (average particle size 16 nm (value determined by a dynamic scattering method), specific surface area 375 $m^2$/g, pH 2.2, solid concentration 16 mass%) and 169 g of water were mixed to prepare a hydrothermal-processing precursor 4.

(3) Hydrothermal processing step

A clear, slightly yellowish aqueous dispersion sol 4 (100 g) having a solid concentration of 10 mass% and a pH of 7.0 was obtained as in Example 1 except that the hydrothermal-processing precursor 4 was used instead of the hydrothermal-processing precursor 1.

The particles contained in the obtained aqueous dispersion sol were titanium oxide particles having the rutile crystal structure and containing nickel, zirconium, tin, silicon, and potassium. Properties of the titanium oxide particles determined by the above-described measurement methods or evaluation methods are shown in Table 1.

Example 5

(1) Coprecipitated gel preparation step

A pale green slurry having a pH of 9.4 was prepared as in Example 4 except that the addition amount of aqueous solution of nickel chloride hexahydrate (manufactured by KANTO CHEMICAL Co., Inc., Cica 1st grade) containing 7.75 mass% of Ni in terms of NiO was 10.4 g. Subsequently, the slurry was filtered, and the residue was then washed with water. Thus, 1,000 g of a coprecipitated gel 5 having a solid concentration of 10 mass% and containing Ni, Zr, and Ti was obtained.

(2) Hydrothermal-processing precursor preparation step

A deflocculant 5 (720 g) of a coprecipitated gel was obtained as in Example 4 except that the coprecipitated gel 5 was used instead of the coprecipitated gel 4. The deflocculant was clear orange, had a pH of 8.2, and had an average particle size of particles in the deflocculant (value calculated by the cumulant analysis from particle size distribution data obtained using a dynamic scattering method (ELS-Z, manufactured by Otsuka Electronics Co., Ltd.) of 67 nm.

Subsequently, a hydrothermal-processing precursor 5 was prepared as in Example 4 except that the deflocculant 5 was used instead of the deflocculant 4.

(3) Hydrothermal processing step

A clear yellow aqueous dispersion sol 5 (100 g) having a solid concentration of 10 mass% and a pH of 6.6 was obtained in the same manner except that the hydrothermal-processing precursor 5 was used instead of the hydrothermal-processing precursor 1.

The particles contained in the obtained aqueous dispersion sol were titanium oxide particles having the rutile crystal structure and containing nickel, zirconium, tin, silicon, and potassium. Properties of the titanium oxide particles determined by the above-described measurement methods or evaluation methods are shown in Table 1. The ultraviolet-visible absorption spectrum and the absorption edge are shown in Fig. 1.

Example 6

(1) Coprecipitated gel preparation step

A pale ocher slurry having a pH of 9.3 was prepared as in Example 4 except that 10.5 g of an aqueous solution of manganese(II) chloride tetrahydrate containing 7.75 mass% of Mn in terms of MnO was added instead of the aqueous solution of nickel chloride hexahydrate (manufactured by KANTO CHEMICAL Co., Inc., Cica 1st grade) containing 7.75 mass% of Ni in terms of NiO. Subsequently, the slurry was filtered, and the residue was then washed with water. Thus, 1,100 g of a coprecipitated gel 6 having a solid concentration of 10 mass% and containing Mn, Zr, and Ti was obtained.

(2) Hydrothermal-processing precursor preparation step

A deflocculant 6 (720 g) of a coprecipitated gel was obtained as in Example 4 except that the coprecipitated gel 6 was used instead of the coprecipitated gel 4. The deflocculant was clear orange, had a pH of 8.5, and had an average particle size of particles in the deflocculant (value calculated by the cumulant analysis from particle size distribution data obtained using a dynamic scattering method (ELS-Z, manufactured by Otsuka Electronics Co., Ltd.) of 68 nm.
Subsequently, a hydrothermal-processing precursor 6 was prepared as in Example 4 except that the deflocculant 6 was used instead of the deflocculant 4.

(3) Hydrothermal processing step

A clear brown aqueous dispersion sol 5 (100 g) having a solid concentration of 10 mass% and a pH of 7.3 was obtained in the same manner except that the hydrothermal-processing precursor 6 was used instead of the hydrothermal-processing precursor 1.
The particles contained in the obtained aqueous dispersion sol were titanium oxide particles having the rutile crystal structure and containing manganese, zirconium, tin, silicon, and potassium. Properties of the titanium oxide particles determined by the above-described measurement methods or evaluation methods are shown in Table 1.

Example 7

(1) Coprecipitated gel preparation step

A pale blue slurry having a pH of 10.5 was prepared as in Example 4 except that 11.7 g of an aqueous solution of copper(II) chloride dihydrate containing 7.75 mass% of Cu in terms of CuO was added instead of the aqueous solution of nickel chloride hexahydrate (manufactured by KANTO CHEMICAL Co., Inc., Cica 1st grade) containing 7.75 mass% of Ni in terms of NiO, and that an aqueous potassium hydroxide solution containing potassium hydroxide (manufactured by KANTO CHEMICAL Co., Inc., Cica special grade) in a potassium hydroxide concentration of 7.5 mass% was used instead of ammonia water (manufactured by UBE Corporation) containing 15 mass% of ammonia. Subsequently, the slurry was filtered, and the residue was then washed with water. Thus, 1,100 g of a coprecipitated gel 7 having a solid concentration of 10 mass% and containing Cu, Zr, and Ti was obtained.

(2) Hydrothermal-processing precursor preparation step

A deflocculant 7 (720 g) of a coprecipitated gel was obtained as in Example 4 except that the coprecipitated gel 7 was used instead of the coprecipitated gel 4. The deflocculant was clear orange, had a pH of 10.5, and had an average particle size of particles in the deflocculant (value calculated by the cumulant analysis from particle size distribution data obtained using a dynamic scattering method (ELS-Z, manufactured by Otsuka Electronics Co., Ltd.) of 245 nm.
Subsequently, a hydrothermal-processing precursor 7 was prepared as in Example 4 except that the deflocculant 7 was used instead of the deflocculant 4.

(3) Hydrothermal processing step

A clear, pale yellow aqueous dispersion sol 7 (100 g) having a solid concentration of 10 mass% and a pH of 7.2 was obtained in the same manner except that the hydrothermal-processing precursor 7 was used instead of the hydrothermal-processing precursor 1.
The particles contained in the obtained aqueous dispersion sol were titanium oxide particles having the rutile crystal structure and containing copper, zirconium, tin, silicon, and potassium. Properties of the titanium oxide particles determined by the above-described measurement methods or evaluation methods are shown in Table 1.

Comparative Example 1

Titanium oxide particles (titanium(IV) oxide, rutile form, -5 μm, 99.9% (manufactured by FUJIFILM Wako Pure Chemical Corporation) were dispersed in water so as to have a solid concentration of 10%, and the pH was adjusted to 9.5 with an aqueous solution of potassium hydroxide (manufactured by KANTO CHEMICAL Co., Inc., Cica special grade). Dispersion treatment was performed using a horn-type ultrasonic disperser (ULTRASONIC TRANSDUCER Type 5281, AUTO CHASER 300, manufactured by Kaijo Corporation) for one hour to obtain an aqueous dispersion 8 of the titanium oxide particles.

The particles contained in the obtained aqueous dispersion 8 were titanium oxide particles having the rutile crystal structure and containing only Ti. Properties of the titanium oxide particles determined by the above-described measurement methods or evaluation methods are shown in Table 1.

Comparative Example 2

A colorless transparent aqueous dispersion sol 9 (100 g) having a solid concentration of 10 mass% and a pH of 6.8 was obtained in the same manner except that, in Example 4, the aqueous solution of nickel chloride hexahydrate (manufactured by KANTO CHEMICAL Co., Inc., Cica 1st grade) was not added.

The particles contained in the obtained aqueous dispersion sol were titanium oxide particles having the rutile crystal structure and containing zirconium, tin, silicon, and potassium. Properties of the titanium oxide particles determined by the above-described measurement methods or evaluation methods are shown in Table 1.

Comparative Example 3

(2) Hydrothermal-processing precursor preparation step

A deflocculant (720 g) of a coprecipitated gel 9 was used, and a cation exchange resin (manufactured by Mitsubishi Chemical Corporation) was mixed with the deflocculant. Subsequently, 91 g of an aqueous potassium stannate solution containing 1 mass% of potassium stannate (manufactured by Showa Kako Corporation) in terms of $SnO_2$ and 10 g of an aqueous potassium niobate solution containing 1 mass% of an aqueous potassium niobate solution (manufactured by KONAN MUKI Co., Ltd.) in terms of $Nb_2O_5$ were gradually added thereto under stirring.

After the cation exchange resin contained in the resulting deflocculant was separated, 11 g of a silica sol (average particle size 16 nm (value determined by a dynamic scattering method), specific surface area 375 $m^2$/g, pH 2.2, solid concentration 16 mass%) and 169 g of water were added to prepare 1,000 g of a hydrothermal-processing precursor 10.

(3) Hydrothermal processing step

A colorless transparent aqueous dispersion sol (100 g) having a solid concentration of 10 mass% and a pH of 7.1 was obtained as in Example 1 except that the hydrothermal-processing precursor 10 was used instead of the hydrothermal-processing precursor 1.

The particles contained in the obtained aqueous dispersion sol were titanium oxide particles having the rutile crystal structure and containing niobium, tin, silicon, and potassium. Properties of the titanium oxide particles determined by the above-described measurement methods or evaluation methods are shown in Table 1. The ultraviolet-visible absorption spectrum and the absorption edge are shown in Fig. 1.

Table 1

| Configuration | | | Unit | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|---|
| Titanium oxide particle | Crystal structure | | [-] | Rutile form | Rutile form | Rutile form | Rutile form | Rutile form | Rutile form | Rutile form | Rutile form | Rutile form | Rutile form |
| | Unit cell | a-axis | [nm] | 0.4624 | 0.4627 | 0.4629 | 0.4630 | 0.4629 | 0.4633 | 0.4629 | 0.4593 | 0.4632 | 0.4632 |
| | | b-axis | [nm] | 0.4624 | 0.4627 | 0.4629 | 0.4630 | 0.4629 | 0.4633 | 0.4629 | 0.4593 | 0.4632 | 0.4632 |
| | | c-axis | [nm] | 0.2977 | 0.2969 | 0.2960 | 0.2972 | 0.2972 | 0.2971 | 0.2971 | 0.2958 | 0.2980 | 0.2977 |
| | | Volume | [$nm^3$] | 0.0637 | 0.0636 | 0.0634 | 0.0637 | 0.0637 | 0.0638 | 0.0637 | 0.0624 | 0.0639 | 0.0639 |
| | Solute elements | Lattice distortion (M1) — M1 | [-] | Mg | Nd | Al | Zr | Zr | Zr | Zr | - | Zr | Zr |
| | | Lattice distortion (M1) — Content (vs Ti) | [mol%] | 4.8 | 5.3 | 5.5 | 4.8 | 5.2 | 5.8 | 6.5 | - | 5.0 | 4.9 |
| | | Impurity level — M2 | [-] | Fe | Fe | Fe | Ni | Ni | Mn | Cu | - | - | Nb |
| | | Impurity level — Content (vs Ti) | [mol%] | 0.83 | 0.88 | 0.86 | 0.06 | 0.69 | 0.99 | 0.76 | - | - | 0.86 |
| | | M1/M2 | [mol/mol] | 5.74 | 5.95 | 6.42 | 78.80 | 7.48 | 5.83 | 8.63 | - | - | 5.67 |
| | Elements contained | Sn content (vs Ti) | [mol%] | 6.63 | 7.67 | 6.83 | 6.83 | 6.91 | 7.62 | 8.22 | - | 6.58 | 6.78 |
| | | Si content (vs Ti) | [mol%] | 28.7 | 27.1 | 26.5 | 27.4 | 26.3 | 31.3 | 31.8 | - | 30.4 | 25.3 |
| | | Alkali metal content (vs Ti) | [mol%] | 5.14 | 5.24 | 5.43 | 4.33 | 4.42 | 5.98 | 6.59 | - | 5.08 | 4.33 |
| | | Sn/M1 | [mol/mol] | 1.39 | 1.46 | 1.24 | 1.41 | 1.33 | 1.32 | 1.26 | - | 1.31 | 1.39 |
| | | Si/M1 | [mol/mol] | 6.04 | 5.15 | 4.83 | 5.66 | 5.07 | 5.45 | 4.86 | - | 6.04 | 5.17 |
| | Composition | Ti (in terms of $TiO_2$) | [mass%] | 71.23 | 66.69 | 71.22 | 69.63 | 69.42 | 66.11 | 64.86 | 100 | 68.47 | 69.77 |
| | | Sn (in terms of $SnO_2$) | [mass%] | 8.91 | 9.65 | 9.18 | 8.98 | 9.05 | 9.51 | 10.06 | - | 8.5 | 8.92 |
| | | Mg (in terms of $MgO$) | [mass%] | 1.71 | - | - | - | - | - | - | - | - | - |
| | | Nd (in terms of $Nd_2O_3$) | [mass%] | - | 7.4 | - | - | - | - | - | - | - | - |
| | | Si (in terms of $SiO_2$) | [mass%] | 15.4 | 13.61 | 14.22 | 14.36 | 13.72 | 15.59 | 15.52 | - | 15.66 | 13.27 |
| | | Al (in terms of $Al_2O_3$) | [mass%] | - | - | 2.5 | - | - | - | - | - | - | - |
| | | Zr (in terms of $ZrO_2$) | [mass%] | - | - | - | 5.2 | 5.55 | 5.87 | 6.55 | - | 5.32 | 5.26 |

| Configuration | | | Unit | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|---|
| | | Fe (in terms of $Fe_2O_3$) | [mass%] | 0.59 | 0.59 | 0.61 | - | - | - | - | - | - | - |
| | | Ni (in terms of NiO) | [mass%] | - | - | - | 0.04 | 0.45 | - | - | - | - | - |
| | | Mn (in terms of MnO) | [mass%] | - | - | - | - | - | 0.58 | - | - | - | - |
| | | Cu (in terms of CuO) | [mass%] | - | - | - | - | - | - | 0.49 | - | - | - |
| | | Nb (in terms of $Nb_2O_5$) | [mass%] | - | - | - | - | - | - | - | - | - | 1.00 |
| | | K (in terms of $K_2O$) | [mass%] | 2.16 | 2.06 | 2.28 | 1.78 | 1.81 | 2.33 | 2.52 | - | 2.05 | 1.78 |
| | Physical properties | Absorption edge (threshold) | [nm] | 438 | 438 | 438 | 440 | 469 | 682 | 439 | 417 | 405 | 404 |
| | | Energy gap (threshold) | [eV] | 2.83 | 2.83 | 2.83 | 2.82 | 2.64 | 1.82 | 2.82 | 2.97 | 3.06 | 3.07 |
| | | Average particle size | [nm] | 18 | 18 | 19 | 17 | 17 | 16 | 17 | 1000 | 17 | 17 |
| | | Particle refractive index | [-] | 2.1 | 2.1 | 2.1 | 2.1 | 2.1 | 2.1 | 2.1 | 2.5 | 2.1 | 2.1 |
| | Photocatalytic activity | SY color fading rate (3 hr) | [%] | 1.76 | 0.92 | 2.54 | 7.2 | 1.39 | 0 | 4.61 | 100 | 18.52 | 16.06 |

EP 4 620 917 A1

18

**Claims**

1. Titanium oxide particles satisfying all of requirements (1) to (3) below:

    (1) the titanium oxide particles have a rutile crystal structure;
    (2) a unit cell of the crystal structure satisfies at least one of (a) or (b) below;

       (a) an a-axis has a length of 0.4594 nm or more,
       (b) a c-axis has a length of 0.2959 nm or more,

    (3) the titanium oxide particles have an energy gap of 2.90 eV or less.

2. The titanium oxide particles according to claim 1, wherein at least one element M1 selected from Al, Mg, Nd, Zn, Nb, Sb, Mo, Zr, and Hf is dissolved as a solid solution in the crystal structure.

3. The titanium oxide particles according to claim 2, wherein a content of M1 is in a range from 1 mol% to 25 mol% in terms of mol% relative to Ti contained in the titanium oxide particles.

4. The titanium oxide particles according to claim 3, wherein at least one element M2 selected from Ni, Mn, Cu, Fe, Co, V, Cr, Rh, and Ir is dissolved as a solid solution in the crystal structure.

5. The titanium oxide particles according to claim 4, wherein a content of M2 is in a range from 0.05 mol% to 5 mol% in terms of mol% relative to Ti contained in the titanium oxide particles.

6. The titanium oxide particles according to claim 5, wherein a molar ratio (M1/M2) of M1 to M2 is more than 1.

7. The titanium oxide particles according to claim 1, wherein at least one element M2 selected from Ni, Mn, Cu, Fe, Co, V, Cr, Rh, and Ir is dissolved as a solid solution in the crystal structure.

8. The titanium oxide particles according to claim 7, wherein a content of M2 is in a range from 0.05 mol% to 5 mol% in terms of mol% relative to Ti contained in the titanium oxide particles.

9. The titanium oxide particles according to claim 8, wherein at least one element M1 selected from Al, Mg, Nd, Zn, Nb, Sb, Mo, Zr, and Hf is dissolved as a solid solution in the crystal structure.

10. The titanium oxide particles according to claim 9, wherein a content of M1 is in a range from 1 mol% to 25 mol% in terms of mol% relative to Ti contained in the titanium oxide particles.

11. The titanium oxide particles according to claim 10, wherein a molar ratio (M1/M2) of M1 to M2 is more than 1.

12. A liquid dispersion comprising the titanium oxide particles according to any one of claims 1 to 11.

13. A coating solution for coating film formation, the coating solution comprising the titanium oxide particles according to any one of claims 1 to 11.

14. A coating film comprising the titanium oxide particles according to any one of claims 1 to 11.

15. A substrate with a coating film, comprising the titanium oxide particles according to any one of claims 1 to 11.

# FIG.1

## INTERNATIONAL SEARCH REPORT

| International application No. |
| --- |
| **PCT/JP2023/040827** |

---

### A. CLASSIFICATION OF SUBJECT MATTER

*C01G 23/00*(2006.01)i; *C09D 7/62*(2018.01)i; *B01J 35/39*(2024.01)n
FI:   C01G23/00 C; C01G23/00 B; C09D7/62; B01J35/39

According to International Patent Classification (IPC) or to both national classification and IPC

### B. FIELDS SEARCHED

Minimum documentation searched (classification system followed by classification symbols)

C01G23/00-23/08; C09D7/62; B01J35/39

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580 (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| X | WO 2021/200135 A1 (JGC CATALYSTS & CHEMICALS LTD.) 07 October 2021 (2021-10-07)<br>claims, paragraphs [0125]-[0130], tables 1-1, 1-3 | 1-15 |
| X | ERDOGAN et al. Synthesis and enhanced photocatalytic activity of molybdenum, iron, and nitrogen triple-doped titania nanopowders. Ceramics International. 2016, vol. 42, pp. 16766-16774<br>3.2. Microstructual analysis, 3.3. UV-vis DRS, tables 1, 2, 4 | 1-11 |
| Y |  | 12-15 |
| Y | WO 2014/141992 A1 (DAICEL CORPORATION) 18 September 2014 (2014-09-18)<br>claims | 12-15 |

☐ Further documents are listed in the continuation of Box C.          ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 January 2024** | **30 January 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** |  |
|  | Telephone No. |

Form PCT/ISA/210 (second sheet) (July 2022)

# EP 4 620 917 A1

**INTERNATIONAL SEARCH REPORT**
Information on patent family members

International application No.

**PCT/JP2023/040827**

| Patent document cited in search report | | | Publication date (day/month/year) | Patent family member(s) | | | Publication date (day/month/year) |
|---|---|---|---|---|---|---|---|
| WO | 2021/200135 | A1 | 07 October 2021 | US | 2023/0128712 | A1 | |
| | | | | claims, paragraphs [0248]-[0257], table 1 | | | |
| | | | | EP | 4129919 | A1 | |
| | | | | CN | 115315412 | A | |
| | | | | KR | 10-2022-0160005 | A | |
| WO | 2014/141992 | A1 | 18 September 2014 | US | 2016/0001266 | A1 | |
| | | | | claims | | | |
| | | | | EP | 2974793 | A1 | |
| | | | | CN | 105073258 | A | |
| | | | | KR | 10-2015-0126842 | A | |

Form PCT/ISA/210 (patent family annex) (July 2022)

22

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05002102 A
- JP H11172152 A
- JP 2009155496 A
- JP 2000204301 A
- JP 2009056387 A
- JP 2010168266 A
- JP 2009197078 A

**Non-patent literature cited in the description**

- *Acta Crystallographica.*, 1976, vol. A32, 751-767